# EUROPEAN PATENT SPECIFICATION

(11) **EP 2 864 968 B1**
(45) Date of publication and mention of the grant of the patent: **07.06.2023**
(21) Application number: 13725184.9
(22) Date of filing: 03.04.2013
(51) Int. Cl.: G07F 5/26, G07F 13/02, G07F 13/04, G07F 9/02

(54) **APPARATUS FOR INVENTORY CONTROL**
VORRICHTUNG ZUR INVENTARKONTROLLE
APPAREIL POUR CONTRÔLE DES STOCKS

(30) Priority: 20.06.2012 GB 201210956
(43) Date of publication of application: 29.04.2015
(73) Proprietor: Anning, Bernard Edgar, Bracknell, Berkshire RG12 9BX (GB)
(72) Inventor: Anning, Bernard Edgar, Bracknell, Berkshire RG12 9BX (GB)
(74) Representative: Hutchins, Michael Richard
(86) International application number: PCT/GB2013/000151
(87) International publication number: WO 2013/190253

(56) References cited:
- WO-A1-02/42199
- WO-A1-02/056265
- WO-A1-2008/035250
- DE-A1-102007 054 431
- US-A- 3 722 650
- US-A- 3 752 357
- US-A1- 2003 109 956
- US-A1- 2009 224 000
- US-A1- 2012 059 513

## Description

This invention relates to an apparatus for inventory control and in particular an apparatus for use in an establishment such as a bar or hotel where alcoholic and other beverages are served.

### BACKGROUND OF THE INVENTION

In establishments such as bars, public houses and hotels where alcoholic and other beverages are served, it is commonplace to use Electronic Point Of Sale operating systems (EPOS) to record sales and payments made by customers. A problem with the EPOS systems currently in use, even those making use of touch screen technology, is that inputting sales data into the systems is a very time consuming operation which must be carried out manually by a bar person or other operative following each sale. A further problem is that there are ample opportunities for information about purchases to be entered incorrectly, with the result that the data recorded can be inaccurate, unreliable and incomplete.

### APPARATUS FOR INVENTORY CONTROL

There is therefore a need for an automated system to overcome the short falls in the present manually operated postings required by todays EPOS Electronic Point Of Sale operating systems and which makes use of non- manual interventions for downloading sales process In particular, there is a need for a system which requires all dispensing components to be disabled and locked only to be enabled and unlocked once an authorised person has been given consent, product identification and quantification being automatically dispatched to the till with the users (ID).

In bars, public houses, restaurants, hotels and similar establishments, alcoholic beverages such as whiskey, rum, brandy, gin and the like are typically dispensed in a standard free pour measure or optic which are stand-alone devices for manually dispensing specific volumes of liquids. The standard optic, which has been adopted throughout the licensed trade for dispensing beverages, is operated by a bar person placing a receiving glass under its outlet and manually pushing the operating lever in an upward direction to a stop point that releases the product. Once the product has been dispensed, the bar person removes the upward pressure to the operating lever, thereby allowing it to return to its original refill location.

Whilst the optic has a government seal of approval ensuring the correct volume of beverage is dispensed with each operation of the device, none of the dispensing apparatuses employed in the trade are designed to ensure the cost of each sale is automatically registered into the till. The responsibility for recording each sale is typically reliant on staff fulfilling their duties in an honest and diligent manner and is therefore open to dishonesty (theft) and errors which can lead to substantial losses in revenue for the industry, as well as a lack of knowledge as to true stock levels which in turn may result in expensive, frequent audits.

To overcome the aforesaid problems, it would be desirable to create a procedure that would control the operational sequence of dispensing the products and automatically inform the till of the activities undertaken for costing.

My earlier patent application, PCT/GB01/05119, published as WO 2002/042199 (see in particular page 9 from line 18 through to page 11 line 21), discloses a device that operates an electrically operated locking device connected to the optic and a magnetically operated switch located within a specific position attached to the optic to provide a counting facility both components connected permanently to the optic.

Whilst the system described in my earlier application goes some way towards addressing the problems discussed above, it does nevertheless suffer from a number of further disadvantages and problems. For example, the locking device for the optic described above makes it difficult for the Standard Optic to be subjected to the normal weekly cleaning routine. For a cleaning operation to be undertaken it is necessary to protect the products from the ingress of water requiring additional expense and not necessarily securing a satisfactory conclusion. Furthermore, changes to the function of the optic as described on page 10 lines 29 through to page 11 lines 21 and the magnetic switching device are sought due to the fact that the counting procedure would be inaccurate and insecure.

The magnet being an addition/attachment to a standard optic leaving the possibility when the optic was changed for cleaning being changed with an optic without a magnet, or the magnet was being unknowingly dislodged during operation or in the cleaning process making the optic the subject of unacceptable failure.

Should the bar person when dispensing the measured product partially released pressure on the operating lever from the top of its travel whilst still dispensing the product, this would reduce the magnetic force on the switch disengaging and opening the contacts, then, by pushing the operating lever back to its top position would close the contacts again and dependent on how many times this rocking momentum went on without disturbing the flow of the product would determine how many additional beverages had been registered as dispensed.

A further failing with the operating procedure of the optic was, should the data carrier "I" button be removed from the electronic device retainer (as stated in line 19, page 10) prior to the optic completing its dispensing operation, the locking device would immediately be de-energised releasing the locking pins.

If this was prior to the operating lever reaching its closed position of rest the pins were released into an incorrect location disabling the operation of the optic and the electrically locking device resulting in repair or replacement being undertaken.

Restricting the operation of the optic to precise procedures could not be enforced and the unnecessary costly replacement of a modified optic due to the failure of either the optic or the attachments is unsustainable.

Whilst the previous invention has offered partial restriction on the unauthorised dispensing of product when operating in the correct mode, it failed to prevent the optic being removed from its normal clamp up righting the bottle and removing it from the optic taking quantities of the product direct from the bottle and replacing the bottle and optic to its clamp was not prevented The next item that requires consideration is the feature regarding beer monitoring. It has been found that beer flow being monitored through the use of flow meters only when subjected to varying beer viscosity, temperature, pressure, and fobbing become unstable. With no further means of calculation the system has been found wanting in accuracy to measuring beverage dispensed at the dispenser will only provide details of the volumes dispensed under controlled environment and do not take into account the interaction between stock movements outside this environment. For example, stock delivery accuracy and stock removed from store rooms can all have an adverse account on the true picture.

To overcome this disadvantage, all delivery and removal of stock need close electronic supervision and is covered in this present invention.

Finally, it is apparent that if a shelf connected to weighing devices located within a cabinet is loaded with different items with varying weights it was found that by adopting the principle of discriminating between brands using only the weight of the product for identification it was unable to complete the task correctly for example taking two bottles of beer each containing 360 ml each weighing 190mg giving a total of 380mgs it could not distinguish between the brand as the difference in weight was insufficient and their weight was never consistent using only the weigh caused further confusion as when then combined weight of two bottles with a total weight of 380 mgs could not distinguish whether this was 6, 4 or 3 bottles of another weight and could therefore using this principle limited the shelf to only have the same branded goods having the same weighted containers to work correctly

### SUMMARY OF THE INVENTION

The present invention sets out to address and reduce or solve the problems discussed above.

In a first aspect, the invention provides an apparatus for controlling and monitoring the storage and dispensing of beverage products; the apparatus comprising:
a plurality of metering dispensers (10, 11, 16, 18) including a draught beverage dispenser in a sales location from which one or more authorized users can dispense beverage products to customers;
1^{st} instance a plurality of locking means (15) for preventing dispensing of a beverage product, each said locking means (15) being operatively linked to a different one of said metering dispensers (10, 11, 16, 18);
a plurality of user identifying devices (12) for identifying authorized users; and
a processor (13) for receiving and processing data from the said user identifying devices (12) and metering dispensers (10, 11, 16, 18), recording the dispensing of beverage products from the metering dispensers (10, 11, 16, 18) by authorized users and calculating the total value of each transaction made by each user; characterised in the apparatus further comprising:
   a plurality of product registration devices for registering the presence of beverage products in one or more secure storage rooms (17), each product registration device being associated with one beverage product or a linked group of beverage products, wherein the product registration devices comprise a tray upon which the beverage product or linked group of beverage products is located, the tray having an associated weighing device which registers the weight of the beverage product or linked group of products and detects removal of the beverage product or group of products from the tray and transmits to the processor information enabling the processor to determine the quantity and type of beverage products removed from the tray;
2^{nd} instance one or more locking means (15) for controlling access to the one or more secure storage rooms (17), each 2^{nd} instance locking means being associated with one storage room;
wherein each user identifying device (12) being operatively linked to a different one of said 1^{st} instance and 2^{nd} instance locking means (15) so that an authorized user can unlock the said 1^{st} instance locking means and thereby dispense a beverage product from an operatively linked metering dispenser or, by unlocking a 2^{nd} instance locking means, can enter one of the one or more secure storage rooms (17); and
wherein the processor (13) further receives and processes data from the said product registration devices, and records the placing of beverage products in the one or more storage rooms (17), the removal of beverage products from the one or more secure storage rooms (17) and removals of stock from the secure storage room can be correlated with the addition of beverage products to one or more of the metering dispensers by the processor.

According to the invention, there is provided an apparatus for inventory control verifying quantity and type of beverages delivered to stock by suppliers against electronic orders placed, identifying authorised user and quantifying beverages transferred from stock to pre-determined electronically identifiable sales locations, and at that and every specific sales locations it would be electronically registered and reported the total of products needing replacement, and electronically reporting the quantity of products that had been replaced.

By means of the apparatus of the invention, it is possible to determine and record electronically the difference between what has been removed from stock and what has been replaced in the sales area and reporting any discrepancies, electronic recognition and authorisation of the user prior to the execution of the transaction, identifying and quantifying beverages dispensed identifying authorised user in execution of a transaction, calculating the total value of beverages dispensed by each identified user and optionally verifies the amount of cash placed in and removed from the cash register in settlement for the transaction.

The apparatus of the invention overcomes problems associated with the present systems in use which are not designed to ensure all products ordered and paid for are received, and when distributed to the sales area are accounted for, are authorised when dispensed and automatically submitted to the till for payment by the person responsible for the sale and the resultant stock and sales dispatched to the appropriate ledgers. The apparatus therefore completes for the first time the purchase to sales to accountability loop and requires substantially no manual stock or sales intervention.

The invention provides an apparatus for the controlling, verifying, quantifying, and recognising types of beverages delivered for stock, transferred from stock to identified sales locations, controlling dispensing of beverages, overcoming the aforementioned disadvantages. The apparatus of the invention provides information to transactions that are currently on going as well as those that have already been completed.

According to the invention, only authorised user identification access will be possible to secured areas where beverages are stored. Removal of stock to replenish depleted sales stock is undertaken from a statement of items needing replacement produced by the system from information gathered from the individual dispensing components that have reported the removal of the products.

Products are identified, quantified, and matched to the predetermined specific location defined within the sales location, with beverage movements being matched to the individual undertaking the action. Dispensed beverages are matched to the authorised individual user who dispensed the said beverage.

This dispensing beverage operation is possible even when the apparatus is in simultaneous use by several users.

The apparatus may further comprise a cash register which is operatively linked to a processor which receives the calculated total value of each transaction made by the user and displays the list of total sales for correlation by the bar person.

The invention provides a means of reporting real time sales and stock offering accurate instant accounts and P&L reports including management resource efficiency levels and wage calculations, and when stock reaches minimum levels is automatically re-ordered to stock levels set by management.

It is preferred that the cash register (when present) has an electrically operated lockable cash drawer that is capable of verifying the correct amount been placed there in settlement of the said transaction and preferably is capable of both counting money in and counting money out. Such means operate by weighing the cash or by reading characteristics indicia of the cash or a combination of the two examples.

It is preferred that the cash register (when present) is capable of verifying moisture levels in paper money and rectifying any inconsistencies thereby prevent errors in weight when placed in the cash drawer. Such means operate through heat or drying apparatus or a combination of both and further that the cash drawer is fitted with a means of maintaining the correct level of humidity.

The cash register is also provided with the means of manual input of transactions for the goods, such as food and beverages, not dispensed by metering dispensers of this invention.

A means of recording credit card and smart card transactions may also be linked to the cash register and/or the processor. In this way, the dispensing operation is monitored by the apparatus and consequently the user is unable to dispense beverages from the metering dispenser of the invention without subsequent payment undetected.

The apparatus of the invention is particularly suitable for use in large bars where large quantities of stock are stored in secured areas and several barmen and bar woman are working at the same time.

Thus each bar person is provided with his or her user (DC) Data Carrier which acts as a user identifying device and can conveniently be carried on a magnetic, optical or electronic data carrier the can be read by a reader associated with a given beverage dispensing device. Alternatively the means of identifying a user may be by means of a personal electromagnetic radiation emitter or by fingerprint. Activating the user Data Carrier device allows an authorised user to gain access to the metering dispensers and at the same time sends information to the processor identifying the beverage dispensed and the user.

The user Data Carrier (DC) device is instructed to allow access to the metering dispenser only to authorised users preventing access to persons in possession of for example, stolen or lost data carrier or radiation emitter or to those persons otherwise barred from accessing the metering dispenser.

The quantity of beverage dispensed is measured by a metering device associated with the metering dispenser and the information relayed to the processor. When the user has finished dispensing the beverage the user (DC) device is deactivated, e.g. by removing the data carrier from the reader and the dispensing device can then be used by another user.

The user can then go to the cash register (when present) where the total of the transaction has been recorded against the user (DC) and once the user has identified themselves by inserting their (DC) into the receptor the cash register displays the itemised quantity on the touch screen. It is preferred that the cash register has a user identifying (DC) device operatively connected thereto, the cash register being arranged to display the calculated total value of the said transaction upon identification of the authorised user by the device.

Thus although the cash register may hold details of the transaction prior to the user (DC) device being activated, it will only display the total of the transaction for a given user upon activation of the user (DC) device by an authorised user. At this point, the user will be given a choice of accepting the data displayed or declining same. If accepted, the sale is finalised. If declined, there will then be further alternatives to address - as an example, should the declined item be selected as a beer then four choices of why it is being declined will be displayed having identified the reason this data can be logged for future discussion, the beer is deducted from the total the sale can then be finalised and the transaction settled with the customer, at that point the transaction is electronically converted into the sales and stock ledger.

The advantage of the arrangement is that a number of users can use the cash register, each user activating their user (DC) device to display their transaction total when they are ready to settle the transaction with the customer. It can be envisaged that the processor can be combined within the cash register.

In order that each individual can keep track of the various dispensing operations and ensure that he or she has provided the customer with the correct number and type of drinks, a plurality of dispenser monitors may be provided, each of which can be programmed to display a running total of a transaction or series of transactions made by that user. Thus each user could be allocated their own individual display monitor or alternatively people working at the same bar could use a monitor that has been segregated into as many sections as bar persons working the bar.

The plurality of metering dispensers include a draught beverage dispenser and may also include any type of dispensers typically found in bars. For example, the dispensers can be the fixed volume spirit dispensers (for example of the type sold by Gaskell & Chambers under the trade mark Optic) or they can be draught beverage dispenser such as beer dispensers, e.g. for dispensing beer under pressure or by hand-pulled pumps or draught or soft drinks dispenser for dispensing drinks such as fruit juices and carbonated drinks or an extendible multi stacked container system for draught dispensing.

The dispensers can also take the form of cabinets such as cold cabinets and ambient temperature cabinets, containing beverages such as beer, cider, wine, and fruit juices and cordial or mixed drinks contained in either glass bottles or cans.

In general at least two fixed volume spirit dispensing adaptor apparatus each to accommodate a fixed volume spirit dispensers , and typically more than two adaptors, will be each located for housing fixed volume beverage dispensers, each adaptor being securely fixed to a wire race way location and will be located into its own associated counting and locking means.

The nature of the 1^{st} instance locking means will depend on the nature of the metering dispenser. For example, if the metering dispenser is a fixed volume spirit dispenser, the locking means can be an electro-mechanical device that immobilises a dispensing arm or lever on the dispenser. The electromechanical device can be a solenoid-based device, the solenoid serving to actuate a locking element to bring it into or out of locking engagement with the dispensing arm or lever. Actuation of the solenoid is controlled by the user ID device.

The 1^{st} instance locking device may be an electro-mechanical locking device for attachment to a fixed volume spirits dispenser and use in conjunction with a user identifying device and apparatus as here in before defined, the locking device comprising a housing and means for lockably attaching the housing to the fixed volume spirits dispenser; the housing containing an electromechanical locking element for engaging a dispensing arm or lever of the fixed volume dispenser to restrict movement thereof and prevent dispensing of the spirits, the electromechanical locking element being actuable when an authorised user is identified by the user identifying device thereby to disengage the dispensing arm or lever of the dispenser to permit dispensing of the beverage.

The electro-mechanical locking device may be provided with electronic communication means for communicating with the processor of the apparatus, and a plurality of switches which are opened or closed in response to movement of the dispensing arm or lever of the fixed volume dispenser and wherein the opening and closing of the switches generates signals which are transmitted via the electronic communication means to the processor and which indicate the volume of spirits dispensed from the dispenser.

When the metering dispenser is for dispensing draught beverage, such as beer, the locking means can simply take the form of an electronic locking mechanically operated valve by which the metering dispenser is either enabled or disabled depending upon whether the user (DC) device has authorised the user.

Where the metering dispenser is a secure area or a cabinet, the locking device can take the form of a lock preventing the secure area or cabinet door from opening.

When the metering dispenser is a draught multi-bottle pumped dispenser the locking mechanism by which the dispensing device is either enabled or disabled depending upon whether the user ID device has recognized a user.

In order to allow volumes or units of beverage dispensed to be recorded, each metering dispenser will have associated there with a means of monitoring the amount of beverage dispensed. In the case of a fixed volume dispenser, this can take the form of a counting device that counts each volume dispensed. In the case of a draught beer dispenser, the monitoring means can take the form of a flow meter combined with a weighting device that determines the fluid flowing through the supply line leading to the dispenser combined with the reduction of weight recorded in the product storage container. In the case of a cabinet, the monitoring means can take the form of a weighing device that records a change in weight of a tray and relates this to the removal of a particular beverage. Such a weighing device can be, for example, be an analogue or digital load cell, or strain gauge.

The apparatus of the invention comprises a plurality of product registration devices for registering the presence of beverage products in one or more secure storage rooms, each product registration device being associated with one beverage product or a linked group of beverage products.

The secure storage room is typically a room, cupboard or container located in the same building as the sales location. It may, for example, be a cellar or store room. Access to the secure storage room is controlled by a 2^{nd} instance locking means and in particular an electronic or electro-mechanical lock which is linked electronically to the processor. The user identifying device is associated with or linked to the electronic or electro-mechanical lock so that an authorised user may gain access to the secure storage room.

Inside the secure storage room, beverage products are stored on or in a product registration device which is linked electronically to the processor. A separate product registration device is associated with each beverage product or a linked group of beverage products. The product registration device detects the presence or absence of beverage products and communicates this information to the processor. Thus, the processor receives information about additions of stock to the secure storage room and removal of stock from the secure storage room. Additions of stock to the secure storage room can be electronically correlated with fulfilment of an order placed for new stock, and removals of stock from the secure storage room can be correlated with the addition of beverage products to one or more of the metering dispensers. Each of the product registration devices typically is associated in the processor with a particular location and a particular type of product.

The product registration device comprises a tray upon which the beverage product or linked group of products rests, the tray having an associated weighing device, such as a load cell or strain gauge, so that the addition or removal of a beverage product can be detected as a change in weight on the tray.

Each tray will typically carry only one beverage product or linked group of products. Examples of linked groups of products include cases or half cases of wine, cases of beer and trays of beer cans.

The trays can vary in size, for example from trays intended to carry only single bottles of wine or beer to trays intended to carry a keg of beer. A keg of beer in the secure storage room can be connected to a metering dispenser in the sales location. The volume of beer dispensed can thus be monitored either by conventional measuring means (e.g. a flow meter in the line connecting the keg with the dispenser or by means of the change of weight of the keg as measured by the weighing device associated with the tray or as a combination of both.

In a further aspect, the invention provides a beverage storing and dispensing system comprising an apparatus as hereinbefore defined and a stock of beverage products, the stock of beverage products being recorded in an inventory stored on an electronic storage device or medium associated with the processor, a proportion of the stock of beverage products being stored in the one or more storage locations and a proportion of the stock being connected to the plurality of dispensing devices; wherein each of the beverage products forming the proportion of the stock in the one or more storage rooms is located on a tray having an associated weighing device which registers the weight of the beverage product and detects removal of the beverage product from the tray and transmits to the processor information enabling the processor to determine the quantity and type of beverage products removed from the tray.

The process of this data can be used for the till to calculate sales totals or for the data base to evaluate stock levels sales totals and provide management information.

### Brief Description of the Drawings

The invention will now be described in more detail and illustrated, but not limited, by reference to the particular embodiments shown in the accompanying drawings in which:
Figure 1 is a schematic view of apparatus for dispensing beverages according to one embodiment of the invention;
Figure 2 is a schematic view of a user identification (DC) device;
Figure 3 is a side view of a mechanical locking device comprising two pegs (only one peg shown)
Figure 4 is a view from and angle of a fixed volume dispenser showing the elongate cut outs at the rear;
Figure 5 is a view of a mechanical locking device along plane ||-||-e
Figure 6 is a view of a mechanical locking device along the plane |-|;
Figure 7 is a cross sectional view of a fixed volume dispenser illustrating part of the dispenser mechanism

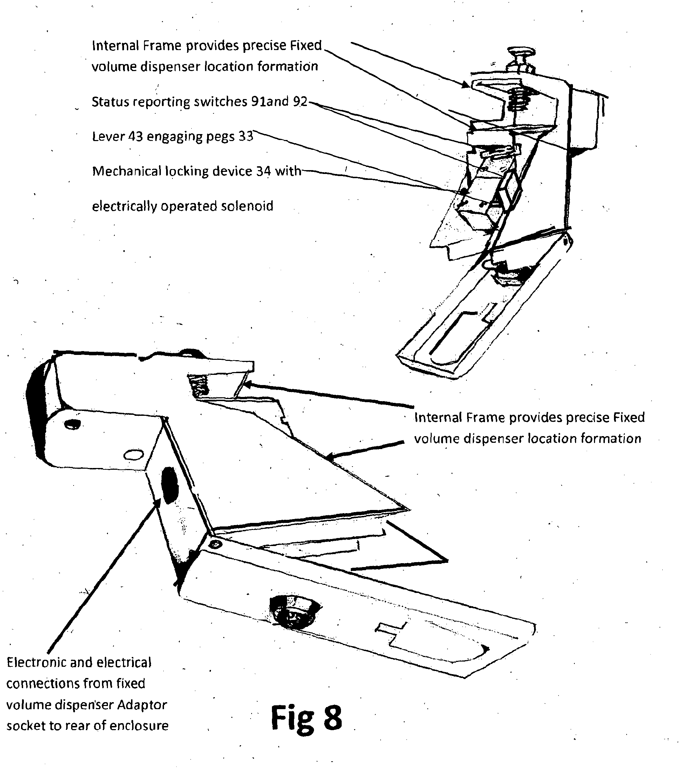

Figure 8 is the interior section of the side elevation of the fixed volume dispenser's adaptor illustrating parts of the securing and electrical connection facilities.
Figure 9 is a cross sectional of the frontal aspect of the fixed volume dispensers adaptor illustrating the electrical mechanical locking device fixed to a precise location switches eighty one and eighty two for facilitating precise dispensed counts
Figure 10 is a view of a sealing adaptor top for fitting to a screwed or cork topped container and for creating an environment within a container where air drawn in is separated internally from the product.
   10a. a view of when the adaptor is in location with flexible fingers and teeth fitting into the bottle recess.
   10b a view of when the adaptor is in location with flexible fingers and teeth fitting into the bottle recess and the outer securing ring is in place
   10c a view of when the adaptor is in its final location with the two semi-circular swivelling extended hand operated closing apparatus having been securely fixed against the structure of the bottle stopper.

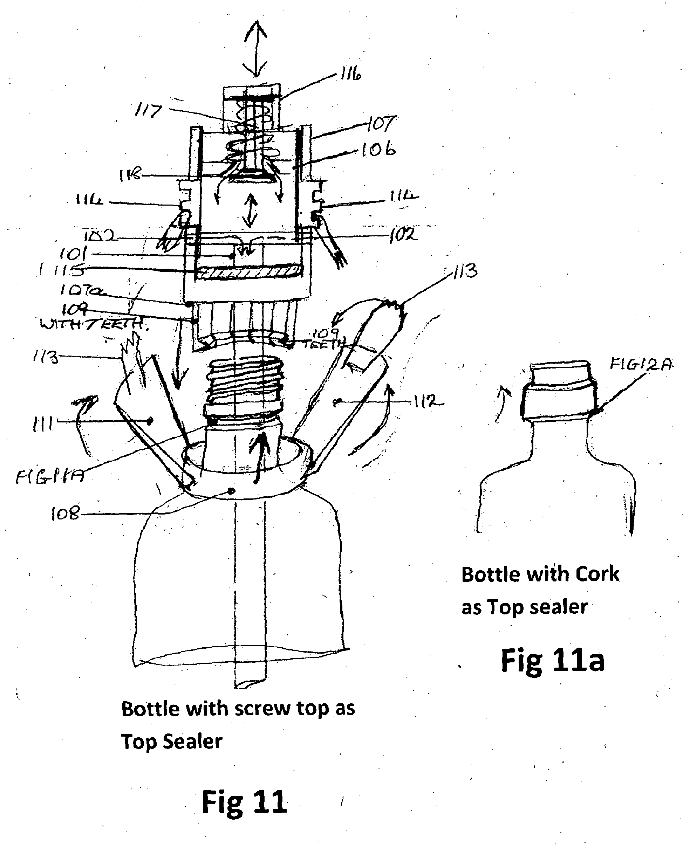

Figure 11 is a cross section of the screwed topped recess for a bottle top sealing adaptor.
   Figure 11a is a cross section of the corked topped recess for a bottle top sealing adaptor

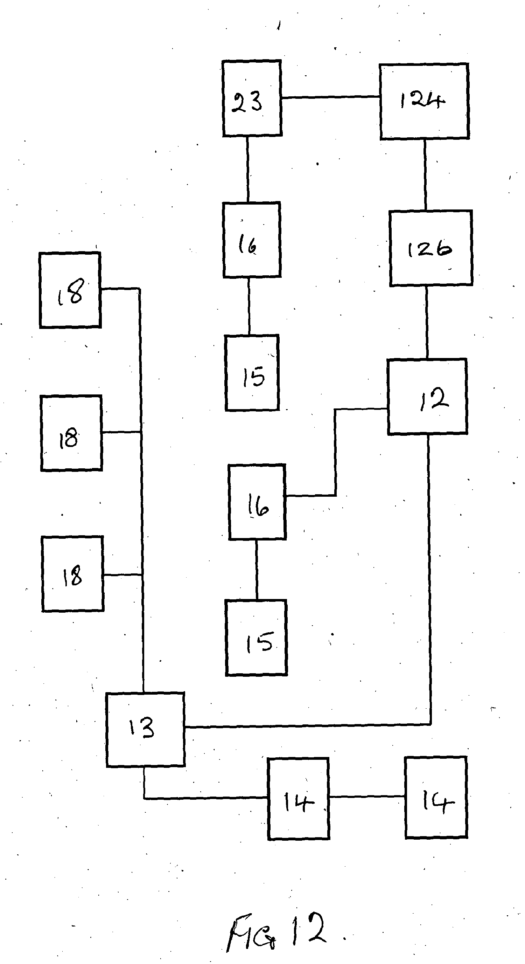

Figure 12 is a schematic view of a Multi Stacked Container Dispensing Apparatus according to one embodiment of the invention

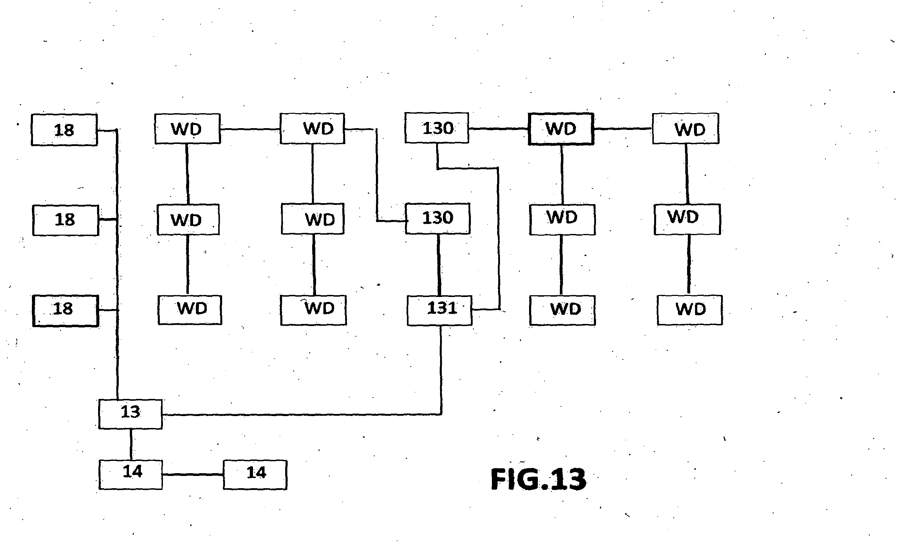

Figure 13 is a schematic view of apparatus for a cabinet dispensing according to one embodiment of the invention

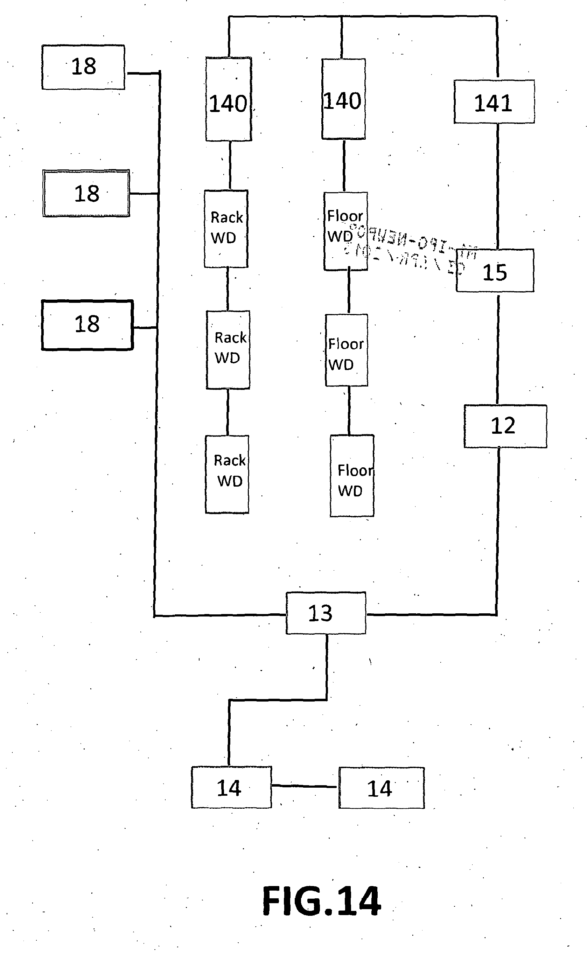

Figure 14 is a schematic view of apparatus for Secure Storage dispensing according to one embodiment of the invention

### Detailed Description of the Preferred Embodiments

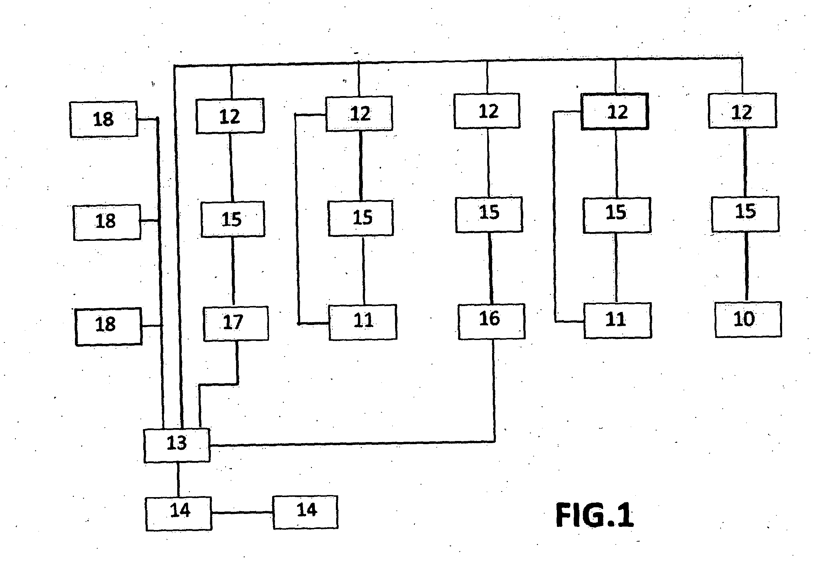

Figure 1 illustrates the basic structure of an apparatus according to one embodiment of the invention. The apparatus comprises secure storage room forming part of or within the building structure 17, plurality of beverage metering dispensers 10, 11,16 and 18 a plurality of locking devices15, for preventing dispensation of beverages from secure storage rooms 17 and dispensers 10,11, 16, and 18 each locking device being operatively linked to a different one of said metering dispensers.

The dispensers 10 and 11 can be any of the types of dispensers commonly found in bars such as fixed volume dispensers for beverages such as spirits, or a draught liquid dispenser for beverage such as draught beer, and dispenser 16 and 18 can comprise a cabinet for bottled beer or any other beverage suitably stored in a cabinet. 17 can comprise a secure cellar or storage area constructed from or within the building for storage of barrelled beers being larger, real ale, bottled beer or all other beverage suitably stored

The apparatus further comprises a plurality of user (DC) devices 12, each being operatively linked to a different locking device 15. User device 12 unlocks locking device 15 on identification of an authorised user. Each dispenser is operatively linked in series, in this case via a communications bus such as a type RS 485 to processor 13 via their respective user (DC) devices. Dispenser 16 and secure storage room 17 are additionally connected, in this case via a separate communications bus such as a type RS485 directly to processor 13. Processor 13 is further operatively linked in this case via a communications bus such as a type RS 485, to a cash register 14 which can be operated via user ID device 18.

In this embodiment the maximum number of user (DC) devices which can be connected in series via an RS 485, directly to processor port is 31, each one allocated an address from 0-30. An apparatus can be envisaged comprising more than 31 user (DC) devices connected in series to a single port. In this embodiment the maximum number of ports is 9. Each one allocated an address from integers 1-9. Again an apparatus can be envisaged comprising more than 9 processor ports. The location of user (DC) device and hence dispenser in the apparatus is thus characterised by a user (DC) device address in combination with a processor port address, both of which are recognised by and programmed into processor 13.

After the hardware making up the system has been installed, the relevant details for each storage area dispenser (e.g. type of storage area, specific location of dispenser, type of brand of beverage at a specific location, unit price of beverage, etc.) are programmed into processor 13, the details being entered against the relevant combination of user (DC) device address and processor port address. As will be appreciated, if details such as the brand of beverage from the Storage area, dispenser or its price subsequently change, such changes can easily be recorded in the software in the processor. A list of authorised users is programmed into each user ID device via processor 13

When the apparatus is in use, the identity of each authorised user is communicated to the processor from each user (DC) device on identification of the user.

Identifications of beverages dispensed from dispensers 10 and 11 are affected by processor 13 by identification of the dispenser in use from details of the user (DC) device address and processor port address, each dispenser is in possession of a unique combination as already mentioned

The process of identifying beverages dispensed restocked or removed from secure storage room 17 and dispenser 16 differs from that described for dispenser 10 and 11. It can be appreciated that Secure storage room 17 and dispenser 16 can contain a variety of beverages at any one time, each type of beverage readily identifiable by a combination of it shelf No and tray No, including counting bottles and dispensed beer and lager by a combination of the measured flow and the unit weight.

Therefore identification by processor 13 is based on a combination of information regarding the location the self No. and the tray No. on that shelf, and Keg base platform No and the total unit weight of beverage dispensed communicated directly to the processor from the dispenser and the identity of the dispenser determined in the aforesaid manner. It can, of course, be envisaged that the information regarding the location and total weight of the beverage dispensed may be communicated to the processor via the user (DC) device.

Information regarding the volume of beverage dispensed by dispenser 10 and 11 is communicated to processor 13 via user (DC) device 12. As previously mentioned, equivalent information from secure storage room 17 and dispenser 16 is communicated directly to the processor13 by-passing the user (DC) device21. As the unit price of each type of beverage has already been programmed into processor 13, the processor is then able to calculate the total cost of each transaction carried out by each user

A bundle of information comprising the identity of the user, the type of beverage dispensed by that user, the volume of those beverages dispensed by the user, and the total cost of the transaction is communicated from processor 13 to cash register 14. When a user wishes to complete a transaction, cash register 14 provides the user with a description of the transaction associated with a user and the total cost on identification of the user by user (DC) device 12. The information is stored electronically within the data base for future reference once the transaction is complete. The user is then free to commence another transaction.

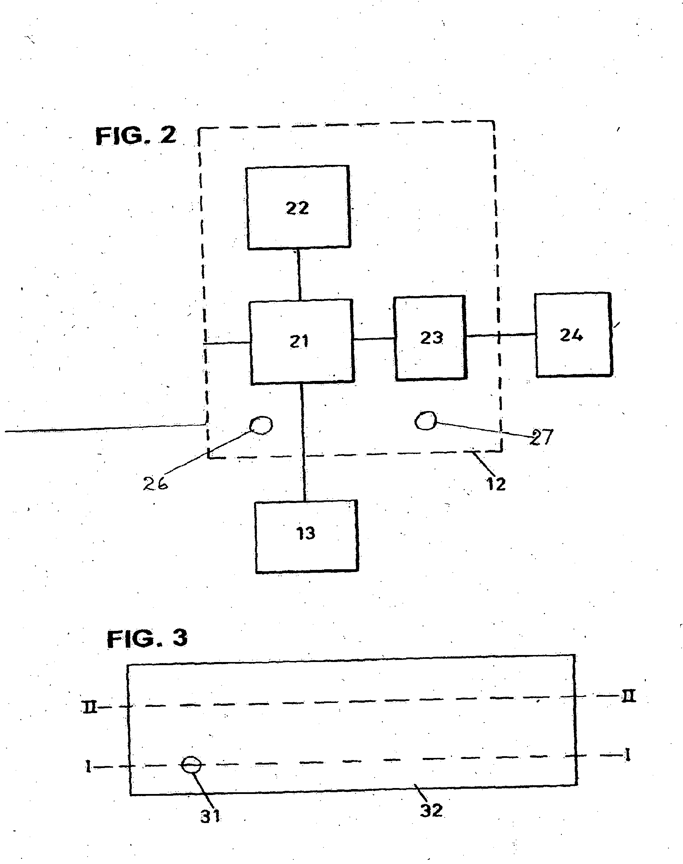

Figure 2 illustrates in more detail the user (DC) device 12. Thus, the user (DC) device comprises a receptacle 22 for a personal electronic data carrier, an electronic processor 21, a transistor 23 a red LED 26 and green LED 27 and an electrical circuit connecting the aforementioned elements. Each electronic data carrier carries a unique code identifying the user. In Figure 2, the receptacle for the personal electronic data carrier is shown as being in close proximity to processor 21, e.g. within the same casing, but it could alternatively be remote from the processor and connected by electrical wiring or other data transmission means. The electronic processor is able to read the code of each electronic data carrier when it is placed in the receptacle and thereby identify the user. The red Led when illuminated indicates the device is healthy and locked. When the data carrier is placed in the receptacle, provided that the data on the carrier is recognised by the electronic processor as being the data for an authorised user of the apparatus, the red LED will be isolated and the green LED will be illuminated indicating the transistor has activated external switch 24, which in this embodiment is a solenoid coil, to which it is attached opening locking device 15. If the data on the carrier cannot be matched to an authorised user, the red LED will remain illuminated and the locking device will not be unlocked. The locking device re-locks on removal of the data carrier from the receptacle and the LED display changes from green to red and it is then transfer of data to processor 13 is undertaken.

In the case of secure area 17 and 16 the operation of the LED is somewhat different whilst the red LED is indicating a healthy supply and locked and green indicates the transistor has activated external switch 24 should the user identifying device be removed from the receptacle 22 prior to the door being closed the red 26 and green LED 27 will continually flash alternately until the door has been securely closed when the flashing will cease a the red LED 26 will remain illuminated, at this point the dispensed data will be communicated to processor 13

In this embodiment, the personal electronic data carrier can be an electronic chip housed in a metal can. Such data carriers are available from Dallas Semiconductor (Texas, USA) as the DS19xx"|"Button series.

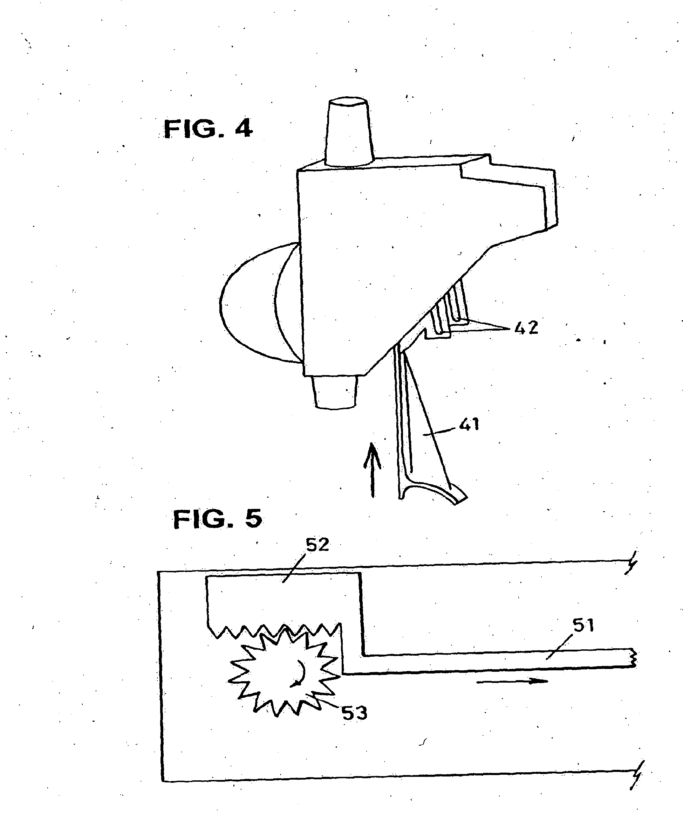

The locking device used in conjunction with the optic adaptor 90 for accommodating /housing fixed volume beverage dispenser comprises a mechanical locking device 32 as shown in Figure 3 comprising two pegs 31 (only one shown) able to insert into the bottom of elongate slots 42 shown in Figure 4 present on the operating lever 41 of a typical fixed volume dispenser. With the pegs extend form the body of mechanical locking device 32 they prevent the normal movement of the lever required for dispensing a beverage. Figure 5 shows the pegs as they appear when engaged within the lever. To disengage from the lever, the pegs retract into the body of mechanical locking device 32 such that the end faces of the pegs are flush with the outside of the exterior wall.

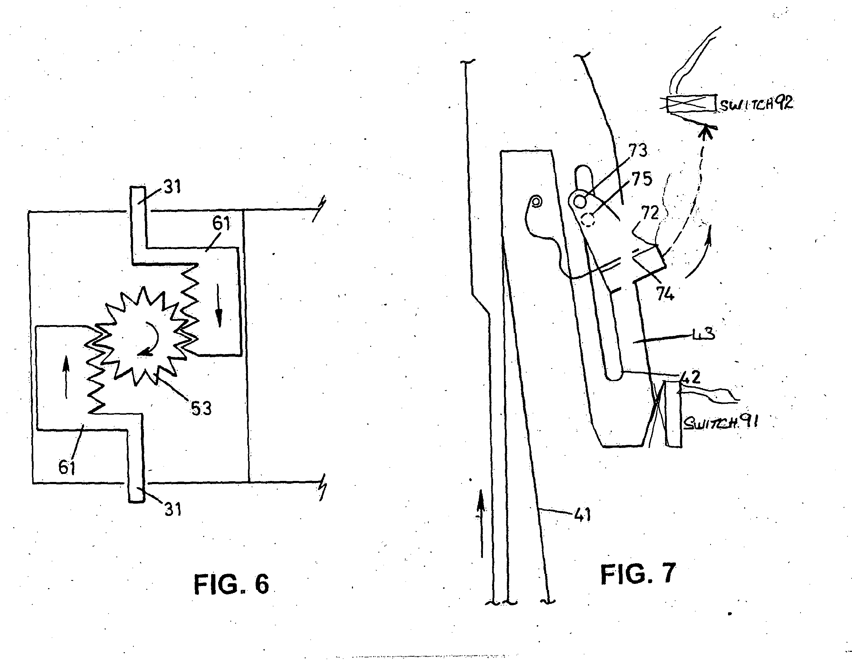

Mechanical locking device 32 operates via a series of racks and pinions. With reference to Figure 5, as rod 51 is pulled in the direction shown by the arrow, rack 52, which is directly connected to the said rod, is pulled in the same direction and pinion 53 rotates in a clockwise manner as indicated by the arrow. With reference to Figure 6, it can be seen that Pinion 53, rotating in a clockwise manner as shown by the arrow, moves racks 61 and pegs 31 attached thereto in opposite directions as indicated by the arrows, resulting in retraction of the pegs into the wall of mechanical locking device 32. By movement of the rod in the opposite direction, it can be seen that the pegs once more protrude from the walls of the mechanical locking device.

Rod 51 is operated by a solenoid (external switch 24) in such a manner that when the data carrier is placed in receptacle 22 and the user identified, the external switch is activated by transistor 23 thereby retracting pegs 31 into the wall of the mechanical locking device.

Thus the normal movement of lever 41 is no longer impeded and the beverage can be dispensed from the fixed volume dispenser. On removing the data carrier, only once the correct information being communicated to processor 13 from switches 91and 92 will the solenoid coil deactivate and the pegs once again stand proud of the exterior walls of the mechanical locking device and engage the lever of the fixed volume dispenser rendering it inoperable.

When the dispensing unit is a draught liquid dispenser, such as those typically used for beverages such as draught beer, locking device 15 is a valve located on the feed line. The valve is operated by a solenoid (external switch 24) in such a manner that when the data carrier is placed in receptacle 22 and identified by electronic processor 21, red LED 26 is distinguished and green LED 27 is illuminated and transistor 23 activates the solenoid coil to open the valve.

On removal of the data carrier from the receptacle prior to completing the pouring of the required measure red LED 26 and Green Led 26 will flash on and off alternately the product being dispensed will continue to flow until stopped by closing the Beer tap then the solenoid coil de-activates closing the valve, after a pre-determined time period the processor will close the count ready to be communicated with processor 13 and LED 26 and LED 27 will be reset to the red LED 26 being illuminated if however the same data carrier is placed back in the same receptacle 22 and identified by electronic processor 21, the red LED 26 will be extinguished and Green LED 27 will be illuminated and transistor 23 activates the solenoid coil to open the valve, to continue dispensing the required quantity the count will continue from the last registered count.

When the dispensing unit is a cabinet, locking device 15 is a lock, which in this case is an electromagnetic lock, The lock is operated by a solenoid (external switch 24) in such a manner that when the data carrier is placed in receptacle 22 and identified by electronic processor 21, red LED 26 is distinguished and green LED 27 is illuminated and transistor 23 activates the electromagnetic coil to unlock the door. If the door has not been opened within a specific period and the data carrier is released from its receptacle the green LED 27 will change from being illuminated to red LED26 being illuminated and the door will be locked.

If the door has been opened and prior to the completion of the dispensing process the data carrier is removed from receptacle 22 the locking device will de-energised the green LED 27 will change from being illuminated to red LED 26 & green LED 27 flashing alternately until the door to the cabinet has been closed the closure of the door is mechanically linked to the electromagnetic locking device which is linked internally to operate a switch located within the structure of the electromagnetic lock, in the closed position the switch provides a positive status report to processor 21, LED flashing will cease and red LED26 will be illuminated communicating to processor 21 of the completion of the dispensing and informing processor 13 the operator (DC) and quantity of product dispensed. Where there is more than one door fitted each of the cabinet doors are controlled by their own electromagnetic lock (external switch 24) all operating as previously described.

When the dispensing unit is a cabinet Fig 13 having one or more doors each door has its own user (DC) device 12. When data carrier receptacle 22 is empty, and all red LEDs 26 are illuminated the doors are locked. On placing the date carrier in the receptacle 22 associated with the door to be unlocked the user is identified as being an authorised user, the processor 130 associated with the or that half of the cabinet is instructed by processor 131 to undertake a scan of the contents within the or that half of the cabinet and communicate the data to the processor 130 memory. With the red LED extinguished and the green illuminated. The magnetic coil of the door where user (DC) has been authorised is activated unlocking that door and the beverages dispensed are analysed by processor 130 only the resulting difference is communicated to processor 131 who in turn commits its revised data direct to processor 13

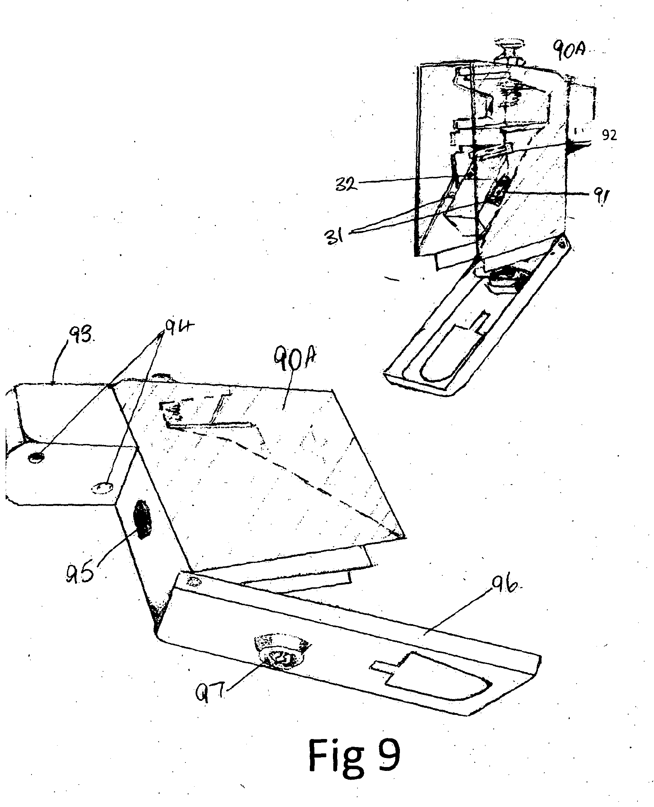

When the dispenser is a Fixed Volume Dispenser (FVD), it is operated by being located within a fixed position within the housing adaptor 90A Fig 9 the adaptor which is securely located to a fixing apparatus designed to accommodate the mechanical fixing of the adaptor to a specific location and a race way for accommodating all electrical and electronic cables associated with the adaptor.

At this location provision has been made such that the rear top section of the adaptor has a square shaped projection the has been designed such that it can be inserted into a metal enclosure of the same dimensions as the square projection designed to accommodate two fixing bolts that extend through the bracket through the receptor holes 94 in the square projection of the adaptor, and finally located in threaded holes within the main cable race way which in turn is fixed to the structure of the bar or building.

Also located at a specific point at the rear of the adaptor is a plug 95 situated such that when the adaptor is being pushed into its square bracket for its final fixing location the plug at the rear of the adaptor will be inserted into a socket located in the upright face of the metal wire raceway to enable electrical connection and electronic communication to be afforded.

There are fitted to the adaptor 90A two safeguards to prevent the unauthorised removal of the optic the first is the swivelling locking catch 96 attached to the base of the adaptor that prevents the removal of the optic without the appropriate manually operated key unlocking manual operated locking device97. The second is by locking device 15 which in this case is a solenoid operated device 32, with the solenoid being inoperative pegs 31 interlocked with the internal slides of the optic mechanically locking the optic into place thereby physically preventing the removal of the optic.

Metering the volume of beverage dispensed is by the action of the dispensing operating lever 41 being internally inter connected with mechanical apparatus and micro switches No 91&92.

And is operated in such a manner that when the data carrier is placed in receptacle 22 and identified by electronic processor 21, red LED 26 is distinguished and green LED 27 is illuminated and transistor 23 activates the solenoid coil to open the locking device. For the purpose of providing data on the state of operation during the optic dispensing process two switches 91&92 of the lever operated type with push to close release to open contacts are located in precise locations within the adaptor 90.

Switch No91 is located to one side of the adaptor 90 in a position where the optic's internal operating slide 43 Fig7 is in the non-operating position. With slide 43 in the non-operated position (REST) the slide will apply pressure against the sprung operated lever of switch 91 closing its contacts. Switch No92 is located at the top of the adaptor 90 in a specific location such that when the optic is in the non-operating position at (REST) the switch has no external pressure applied to the sprung operated lever and the switch 92 contacts are opened.

When lever 41 fig 7 is moved in the direction shown by the arrow to dispense a beverage, the elongate slots in slide 43 move in the same direction. When slide 43 has travelled sufficient distance to pass switch 91 Fig 7 pressure applied to the operating levers of switch91 is released thereby opening the switch contacts, Pins 75 Fig 7 moves towards the base of the elongate slots rotating arm 72, about pivot 73 in an anti-clockwise manner. With fixed volume beverage dispensed arm 72 has travelled to the extremity of its movement having rotated about pivot 73 in the manner shown by the arrow, Switch 92 is positioned such within the adaptor that arm 72 applies pressure against the sprung operated lever closing the switch contacts of switch92.

Having completed the dispensing of the beverage lever 41 is moved in the opposite direction to that shown by the arrow, the elongate slots in slide 43 move in the same direction. When slide 43 has travelled sufficient distance to reach switch 91 pressure is re-applied to the operating levers of switch 91 thereby closing the switch contacts, Pins 75 move towards the top of the elongate slots rotating arm 72, about pivot 73 in a clockwise manner.

With volume beverage dispensed arm 72 at the extremity of its movement having rotated about a pivot 73 in the opposite manner shown by the arrow, Switch 92 is positioned such within the adaptor that arm 72 no longer is applying pressure against the sprung operated lever thereby opening the switch contacts of switch92.

Switch 91 changes state when switch contacts change from being closed to being in the open position the information transferred to the processor 13 is that the status report changes from positive with the switch 91 contacts closed to negative therefore indicating the optic has commenced its dispensing cycle of releasing the product.

When switch No92 is open in the normal state the information to the processor 13 is that the status report is negative and therefore the optic is not yet fully opened.

When switch No 92 contacts changes from being open to being closed the information transferred to the processor 13 is that the status report has changed from negative to positive therefore indicating the optic is now fully opened and the product is/has been released.

Therefore the full sequence of operation is as follows:
Data carrier is inserted to receptacle 22 and identified by electronic processor 21, red LED 26 is distinguished and green LED 27 is illuminated and transistor 23 activates the solenoid coil to electrical locking device 34 located within adaptor retracting locking pins
Switch 91 closed -processor status report positive optic not in use at (REST).

Optic is manually operated By Bar person to dispense liquid
Switch 91 opened - processor 13 status report negative optic dispensing process commenced.
Switch 92 opened - processor 13 status report negative optic not fully opened.
Switch 92 closed - processor 13 status report positive optic fully open and now dispensing liquid.
Switch 92 opened - processor 13 status report negative optic now starting to close.
Switch 91 closed - processor 13 status report positive optic closed dispensing complete.

The combination of the two switch action has been designed to ensure accuracy of counting and preventing premature release of the locking device pins.

The embedded software design is such that only when the data carrier is removed from the adjacent receptacle 22 of the electronic device will the locking device be de-energised and the processor will release the bar person name and the count quantity dispensed to processor 21 which is then communicated to processor 13.

If the data carrier is released from its receptacle prior to the completion of the dispensing process the locking device will remain energised however the green LED 27 will change from being illuminated to red LED26 & green LED27 flashing alternately until Switch 91 is in the closed position giving a positive status report to processor 21, LED flashing will cease and red LED26 will be illuminated communicating to the processor 21 to de-energise the locking device and inform processor 13 the operator ID and quantity of product dispensed.

Should the Data carrier be retained in its receptacle after dispensing the first liquid count the locking device will remain energised awaiting removal or for the dispensing operation to proceed for a further dispensing operation.

The invention of the adaptor is intended to overcome the ability of unauthorised removal of the optic from its housing.

To remove the optic from the adaptor Fig 9 device 90A for the replacement of an empty bottle or and routine cleaning can only be accomplished by utilising the correct higher authority data carrier this recognises that the optic is being removed for cleaning / maintenance purposes or the changing of an empty product for a full one when the locking device will remain energised or if the (DC) is removed from the receptacle will re-energise once the (DC) is reinserted into the receptacle. Failure to adopt this procedure will result in the locking device 34 being de-energized release the two locking pins from within the barrier wall protruding externally preventing the optic being reinstated within the adaptor.

Two safeguards prevent the removal of the optic the first is the swivelling locking catch 95 attached to the base of the adaptor that prevents the removal of the optic without the appropriate manually operated key being inserted into locking Fig 9 device 97.

Whilst it is recognised that unauthorized access to the key is possible the second safeguard is the electronic locking device 34 would require authorization through the use of a data carrier to unlock the optic prior to being removed from the adaptor.

Whilst it is reasonable to conclude people with access to data carriers during their working period when inserting it into its receptor will disengage the lock 34 from the optic as is required when dispensing the product could also have access to a key that will release the swivelling locking catch 96. Therefore be able to remove the optic from the adaptor and illegally releasing the product by up righting the bottle removing the optic from the bottle releasing the product then replacing the bottle onto the optic replacing the optic without anyone's knowledge.

Switch No91 has been utilised for confirmation of the completion of product dispensed and therefore an accurate count and a release of the locking device. A second feature is to provide a status report to the processor every 250milli seconds, if the status returned is positive no further action is taken should however the status report return negative as is the case when the optic has been removed and if the further required data has not been forthcoming within a timed period of 3 seconds when the green LED 27 will change from being illuminated to the red LED26 & green LED 27 flash alternately the power to the locking device 34 is de-energised thereby releasing the locking pins preventing the optic being refitted back to the adaptor housing.

This action can only be brought about by the insertion of a data carrier into the receptacle on the electronic device 22 and switch91 contacts changing from closed to open as a result of the optic lever pressure being removed, resulting in a negative status report being received at the processor 21a negative status report automatically starts an internal timer within the processor which is terminated once the processor receives data from switch92 that is contacts changed from open to closed changing a negative status report to a positive status report.

Should after three seconds this data not be forthcoming power to the locking device is disconnected releasing the locking pegs 31 preventing the optic being returned to its normal working position the situation can only be rectified by the removal of the optic and resetting the electrical locking device 34 by a higher authorization data carrier being inserted.

Three seconds has been proven to be adequate time for the normal dispensing action measured from the start of the barperson pushing the optic lever vertically to the arrival at the top of the movement for the release of the liquid, but is insufficient time for the unauthorised removal and replacement of the optic.

The use of the higher authorized data carrier to reset the electronic locking device 34 is to enable the correct authority to identify the reason for the misuse of the optic.

When the dispensing unit is a cabinet, the volume of beverages dispensed is also metered. To accommodate this feature specifically designed support shelves are fitted into the cabinet. Each shelf accommodates a number of specifically sized individual trays, each tray is secured to the shelf by one or more specifically designed weighing devices, weighting devices associated with an individual tray are connected via electrical wired connections or other means and the varying voltage created by the removal or addition to the tray of a product is detected by electronic processor 130 this voltage is stored as a digital format and relayed to processor 131 on demand.

Upon the removal of the data carrier giving an indication that the completion of the dispensing of beverage has taken place as a result of the door being closed and the locking device being able to mechanically reset a signal is sent to processor 131. If after a pre-set period of the data carrier being removed the reset signal is not received both red and green LEDs will commence alternate flashing and continue until the door has been securely closed

Should the cabinet have more than one door in order that the interior of the cabinet can continue this division for identification of product location the shelf is electronically constructed such that each half of the cabinet is segregated through the use of two processor 130 each half will thereby accommodate a specific number of individual trays in specific locations relative to the shelf location being communicated with a specific processor 130.

The data collected by processors 130 is transferred to a central processor 131 which communicates to processor 13 A suitable weighing device can be an analogue or digital load cell. Each load cell is able to measure differences in weight, thus the removal of any beverages from any of the trays is immediately detected by the load cells and communicated to its respective processor 130.

When the dispensing unit is a secure area 17 figure 14, the volume of beverages put in place removed or dispensed are also metered. To accommodate this feature a plurality of Floor Mounted Weighting Devices based trays are employed to accommodate a plurality of bulked storage beer and lagers containers product being dispensed from any of the bulk storage containers will result in a change in the weight this change is detected by processor 170 which in turn communicates the results to processor 171 and forwarded to processor 13, on demand data communicated from the flow meter located adjacent to the dispensing tap associated with that product dispensed is communicated to processor21 and is then communicated to processor 13 to cross correlate the results and confer both readings concur with the results.

A plurality of storage racks fitted with height adjustable shelves all with Rack Weighing Devices of specific design secured to the shelves, the weighting device are in turn secured to individual trays provides varying voltages created by the removal or addition of products are identified to the specific shelf and tray, located at a specific location communicated to electronic processor 170 via electrical wired connections or other means this voltage is stored as a digital format and communicated to processor 171 and communicated on demand to processor 13 the changes detected will be used as data for the updating of the data base and used as an audit trail for restocking and depletion of produces.

When the dispensing unit is a Multi-Stacked Container Dispensing Apparatus unit10 FIG 12 for draught dispensing, such as those typically used for bulk delivery of beverages such as draught, fruit juice sodas Wine etc., a locking device 15 is an isolating valve located in the feed line adjacent to the serving tap. The isolating valve is operated by a solenoid (external switch 24) in such a manner that when the data carrier is placed in receptacle 22 and identified by electronic processor 21, red LED 26 is distinguished and green LED 27 is illuminated and transistor 23 activates the solenoid coil to open the isolating valve on the main feed line. Product delivered to the serving tap through the pipelines will be measure by the use of a flow meters device 16 being fitted adjacent to the isolating valve.

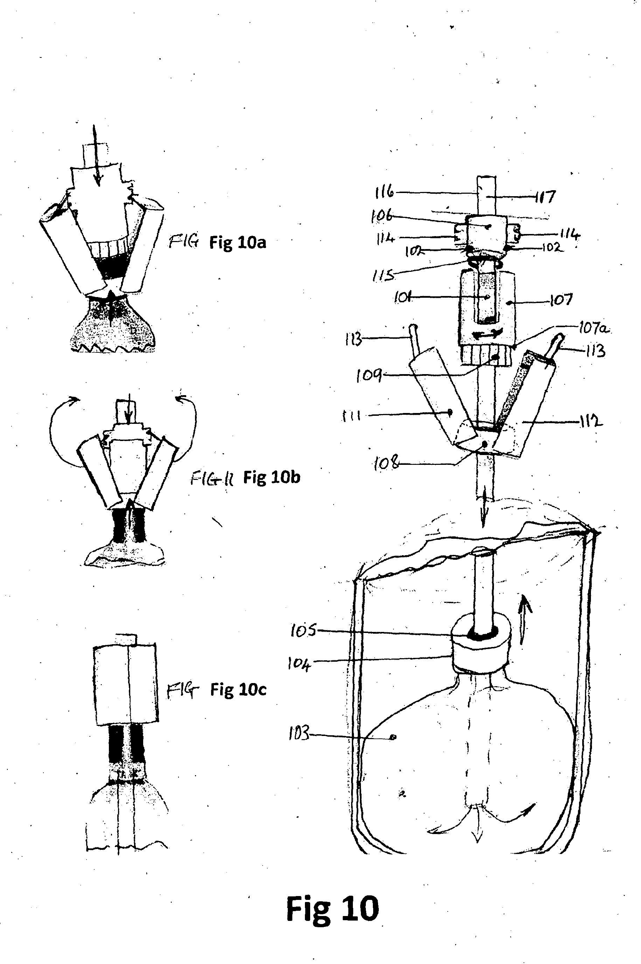

Each Multi Stacked Container Dispensing Apparatus(MSCDA) Fig 12 is designed to delivered a specific beverage from a plurality of beverage containers each being inserted into receptors attached to the (MSCDA)to each receptor is connected an isolating valve fitted with a flow meter each receptor is designed to enable a product container having a (CSLD )107 attached to be inserted into the receptors when the plurality of product containers are fitted to the (MSCDA)deliveries of its specific beverage is routed through the receptors isolating valve and flow meter located within the structure of the(MSCDA)including a series of pipes that are connected to the outlet of each (MSCDA)therefore the (MSCDA) can be located adjacent to the serving tap or remotely, A (MSCDA) will have a plurality of containers attached; If the product is delivered in a container form to enable the product to be dispensed from the (MSCDA)it will have attached at the container outlet Fig10 the Container Stop Locking Device (CSLD) 107 preventing release of the product even when the container is inverted.

The (CSLD) is designed to accommodate an extended tubular apparatus 101 which will be inserted into the opening of the product container and submersed to the bottom this will reduce the resistance of air entering the container by delivering the air directly to the base of the container increasing the flow rate of the product being extracted from the container. To avoid a product being adversely effected by the introduction of air this apparatus will comprises a tube secured to the inlet air device 102 of the (CSLD) to which at the other end of the tube is attached a device which accommodates a compressed transparent container 103.

This accommodating device 104 is positioned onto the end of the tube taking care that the air sealing apparatus 105 surrounding the tube and attached to the base of the device is not to damage. It is intended the tube be insert through the sealing apparatus 105 to a point where the tube is protruding through the accommodating device 104 and is visible within the transparent container 103 that is still at this point compressed into the accommodating device.

This is to ensure the transparent container 103 will be encasing the end of the tube101 in such a manner that the transparent container will collect air being drawn in from the outside atmosphere through the tube101 into the transparent container 103 when the product is being dispensed, isolating/ arresting the drawn in air from the product thereby preventing the air contamination of the product. With the continuation of air being drawn in during the dispensing of the product and being received into the transparent container the container will begin to expand and in so doing will be gradually extracted /released from the accommodating device.

With the continual expansion of the transparent container filling the spaced left at the bottom of the product container it will begin to exert pressure onto the accommodating device such that the accommodating device 104 begins to travel up the tube replacing the vacant space created by the extracted product with transparent container filling with air until such times as the product has been emptied and the transparent container has been expanded to fill the interior space of the product container.

Air routed through the inlets 102 positioned either side of the (CSLD) sliding bottle stopper 106 is routed down and through the base centre of the (CSLD) sliding container stopper 106 Product released from the outlet of the bottle is routed through orifices created around the air inlet device at the base of sliding bottle stopper 106.

Container Stop Locking Device (CSLD) 107 is designed to be attachable to the neck of either a container that employs a screwing top as a stopper Fig 11 or a cork as a stopper Fig 12. The (CSLD) 107 and outer securing ring 108 are placed over the top of a container neck and pushed down in the direction of the arrow until the teeth on the end of expanding spring fingers 109 which extend from the base of 107 are locate around and into the moulded recess formed into the neck of the bottle, this recess is located beneath the end of the threaded portion when the stopper is a screw fixing seal Fig11 item 11a. Or alternately when the stopper is a cork located below the enlarged portion of the moulding Fig 12 item 12a.

When (CSLD)107 is in position as such that the(CSLD) locking device flexible fingers 109 teeth have a secure grip around and into the neck recesses as shown in Fig10a the outer securing ring 108 is pulled up over the flexible fingers 109 as shown in fig10b in the Direction of the arrow to a point where the extended fingers form part of the main assembly (CSLD) 107 this recess 107a will form the stopping point for the outer securing ring 108 preventing the outer securing ring 108 being dislodged by upward pressure.

With the outer securing ring 108 securely located over the flexible fingers whose teeth grip around the container recess 11a or alternatively 12a, preventing the flexible fingers from opening outwardly and releasing their grip on the neck recess when being exerted to the upward pressure created by the action of the sliding bottle stopper 106 being secured into position. In other words pressure being exerted in the opposite direction to the arrow pointing downwards.

Attached to the outer securing ring 108 are two semi-circular swivelling extended hand operated closing apparatus 111 and 112 further detailed Fig 11b such that when closing they swivel in the direction of the arrows.

Attached to apparatus 111and 112 are mechanical loops 113 and further detailed Fig 11d that also swivel in the direction of the arrow when being closed or in the opposite direction when being opened, which are in turn connect to the bottle stop adjusters 114 located either side of the sliding Container Stopper 106 the purpose of these apparatus is to enable the difference in distance that exists between the top of the container and recess of a screw top and the top of the bottle and the recess of a cork top to be manually adjusted.

When the sliding container stopper106 which has a rubber seal fitted to its base 115, is positioned over the top of the bottle outlet, the sliding bottle stopper 106 is designed such that the force being exerted by the action of the two semi-circle extended hands operated apparatus being closed.

Manual hand operated squeezing action applied to apparatus 111 is closing in the anti-clock wise direction and 112 is closing in the clock wise direction causing the mechanical loops 113 which were located below the bottom of the container stop adjusters at the commencement of the sealing process

With the continual rotation of 111and 112 the mechanical loops 113 become extended above the top of the container stop adjusters 114 thereby applying a downward force onto the sliding container stopper 106 such that the seal 115 at the base of the bottle stopper 106 is forced against the top of the mouth of the container sealing in the contents.

The continual manual squeezing action of the two semi-circle extended hand operated closing apparatus 111 and 112 continues to a point where the vertical point of balance between the container stop adjusters 114 and the mechanical loops 113 attached to the extended hand operated closing apparatus 111 and 112 has been exceeded.

At this point the forces being exerted between the flexible fingers 109 teeth locked into the recess of the container neck of fig 11a or alternatively Fig 12a securely locked in place by the outer securing locking ring 108 and the two semi-circle extended hand operated closing apparatus 111 and 112 and the container stop seal 115 sitting upon the top of the container opening is no longer being increased.

Having now past the point of balance the continual rotation is now automatic and pressure is reducing until the extended hand operated closing apparatus 111 and 112 are physically prevent from rotating further by striking the structure of the bottle stopper assemble thereby creating a mechanically secure watertight fixing to the top of the container opening .

At the top of the container stop is a round male projecting section 116, fitted within this assemble is a manually operated sprung release valve 117, incorporating sealing device 118.

In the normal position the valve is closed preventing release of its contents when the container is being rotated such that the base is uppermost, the valve117 is only activated by the projecting assemble being inserting down into the extended spout of a female receptor. Each female receptor is fitted with means of capturing any escaping liquid.

With the (CSLD) 107 being fully inserted against a stop fitted in the base of the female receptor the manually operated sprung valve 117 will be opened releasing the product.

In the event the container should need to be removed from the female receptor prior to the container being empty once the container is released from the stop the internally fitted spring value117 will immediately close preventing any further release of product from the container.

To ensure the product will only be released from the container when the container is located in the female receptor each female receptor is mechanically attached to an electrically operated solenoid valve with a flow metering device attached at the outlet.

With the data carrier being placed into the receptacle 22 of a specific product and the user (DC) being authorised by processor 22, red LED 26 is distinguished and green LED 27 is illuminated and transistor 23 activates the solenoid coil to open the isolating valve Device 15 on the main feed line next to the serving tap.

Processor 22 communicates to processor 126 located within the structure of the (MSCDA) requesting the release of the product to be dispensed. Within the structure of each (MSCDA), is fitted also a processer 124 and a plurality of transistors. Processor 126 will communicate to processor 124 requesting initiation of the first of a Plurality of transistors 23 associated with each of the Plurality of solenoid valvesdevice15.

The activation of each solenoid valve Device 15 located within the structure of the (MSCDA) will be undertaken in numerical order starting at the lowest number available the transistor Device23 associated with the first solenoid vale device 15 attached to the base of the first receptor is energised its outlet is connected to a flow metering device16 which has its outlet connected to a common manifold which in turn is connected to a pumping device.

Measurements from each metering device16 is communicated to processor 124 and when the flow measurements determine the content of the duty product container has been reduced to 5% the processor 124 will energise the transistor 23 associated with the solenoid valve15 connected to the next beverage bottle and the metering device 16 attached to this valve will meter the quantity of product flowing to the common manifold at the same time communicating with processor 124.

Product Container No1 flow data being collected at the same time from the metering device attached to valve No1 will continue to communicate with Processor 124 and when the count is finalised or alternatively a no flow signal is detected the valve is deactivated.

At the same time as the processor initiated the release of the beverage the pump associated with delivering beverage released from the product containers is energised by a transistor initiated at the same time as the release of the first container it is pumped to the delivery line through a 2nd flow metering device located adjacent to the dispensing tap and its data is communicated with processor 22.

With the data carrier removed from the receptor or the dispensing tap being closed the pump and the duty valve at the base of the duty product container will be de-energised ensuring the beverage not released from the container will be captured.

The quantity of product dispensed will be individually metered by a metering device attached to the isolating vale attached to each female receptor, monitoring the quantity of beverage dispensed enables the system to identify the volume of product held in the container.

When the product has been depleted to approximately 5% of the total, processor 126 will organise the energising of the valve associated with the next bottle ensuring a continual flow of the product release, when the system detects the first container has been fully emptied monitored by the count or the detection of a no flow signal at any time during dispensing the valve will be isolated preventing the introduction of air into the system supply routes or a failure in the product supply.

To monitor that the beverage being dispensed the volume being released from the (MSCDA) has attached a weighing device. Measuring the volume and monitoring the reduction in weight when combined with the measured flow quantity will provide accurate volumes dispensed.

(MSCDA) dispensing specific brands and will be located at specific locations throughout the sales area and will be identified by their specific locations.

Alternative individual (MSCDA)in the form of a cabinet that contain only weighting devices to measure only the weight of the product to determine product containers being removed or replaced will be located at specific locations throughout the sales area and will be identified by their specific locations.

Inserting a data carrier into receptor 22 will initiate a process of investigation which will take place within the processor and will initiate acceptance or refusal for access to the dispenser On removal of the data carrier from the receptacle prior to completing the pouring of the required measure red LED 26 and Green Led 26 will flash on and off alternately the product being dispensed will continue to flow until stopped by closing the outlet tap and the solenoid coil de-activates closing the valve.

After a pre-determined time period the processor will close the count ready to be communicated with processor 13 and LED 26 and LED 27 will be reset to the red LED 26 being illuminated if however that data carrier is placed back in the same receptacle 22 and identified by electronic processor 21, the red LED 26 will be extinguished and Green LED 27 will be illuminated and transistor 23 activates the solenoid coil to open the valve, to continue dispensing the required quantity the count will continue from the last registered count.

Several fixed volume dispensers, draught liquid dispensers or cabinets, can be connected in series via a RS 485 communications bus to one processor port

The invention may optionally comprise a plurality of cash registers. A further option is a cash register 14 able to identify each note and coin placed therein and removed by provision of, for example, weight cells attached to every note and coin tray. The cash register is thus able to verify that the correct amount of cash is placed in and removed from the cash register thereby reducing error and fraud.

Each user could also be provided with one or more display units 18, operatively linked with processor 13 that provides to the user and any person being served by the user a description of the transaction associated with the user and the total cost both during and on settlement of the transaction.

Another option is the provision of a timer delay for draught liquid dispensers which maintains the solenoid coil (external switch 24) activated for a pre-set period after removal of the data carrier from receptacle 22. The period of delay allows a pre-determined amount of over-fill when dispensing beverages such as beer that are characterised by a foaming head.

Further processors may be provided as a back-up for processor 13.

## Claims

1. Apparatus for controlling and monitoring the storage and dispensing of beverage products; the apparatus comprising:
a plurality of metering dispensers (10, 11, 16, 18) including a draught beverage dispenser in a sales location from which one or more authorized users can dispense beverage products to customers;
1^{st} instance a plurality of locking means (15) for preventing dispensing of a beverage product, each said locking means (15) being operatively linked to a different one of said metering dispensers (10, 11, 16, 18);
a plurality of user identifying devices (12) for identifying authorized users; and
a processor (13) for receiving and processing data from the said user identifying devices (12) and metering dispensers (10, 11, 16, 18), recording the dispensing of beverage products from the metering dispensers (10, 11, 16, 18) by authorized users and calculating the total value of each transaction made by each user; **characterised in** the apparatus further comprising:
a plurality of product registration devices for registering the presence of beverage products in one or more secure storage rooms (17), each product registration device being associated with one beverage product or a linked group of beverage products, wherein the product registration devices comprise a tray upon which the beverage product or linked group of beverage products is located, the tray having an associated weighing device which registers the weight of the beverage product or linked group of products and detects removal of the beverage product or group of products from the tray and transmits to the processor information enabling the processor to determine the quantity and type of beverage products removed from the tray;
2^{nd} instance one or more locking means (15) for controlling access to the one or more secure storage rooms (17), each 2^{nd} instance locking means being associated with one storage room;
wherein each user identifying device (12) being operatively linked to a different one of said 1^{st} instance and 2^{nd} instance locking means (15) so that an authorized user can unlock the said 1^{st} instance locking means and thereby dispense a beverage product from an operatively linked metering dispenser or, by unlocking a 2^{nd} instance locking means, can enter one of the one or more secure storage rooms (17); and
wherein the processor (13) further receives and processes data from the said product registration devices, and records the placing of beverage products in the one or more storage rooms (17), the removal of beverage products from the one or more secure storage rooms (17) and removals of stock from the secure storage room can be correlated with the addition of beverage products to one or more of the metering dispensers by the processor.

2. An apparatus according to claim 1 which comprises a cash register operatively linked to the processor which receives the calculated total value of each customer transaction made by each user; and wherein the cash register is provided with means verifying that a correct amount of cash has been placed therein in settlement of the said customer transaction; and optionally further wherein the cash register has a user identifying device operatively connected thereto, the cash register being arranged to display the calculated total value of each said customer transaction upon identification of an authorized user by the device.

3. Apparatus according to any one of the preceding claims comprising at least one display monitor which is adapted to display a running total of a transaction or series of transactions made by an authorised user.

4. Apparatus according to any one of the preceding claims wherein the metering dispensers are selected from:
(i) fixed volume spirits dispensers;
(ii) draught beverage dispensers;
(iii) temperature-controlled cabinets; and
(iv) ambient cabinets.

5. Apparatus according to any one of the preceding claims wherein the one or more secure storage rooms comprises a room, cupboard or other secure enclosure forming part of or constructed within a building in which at least part of the apparatus is located.

6. Apparatus according to any one of the preceding claims wherein the plurality of metering dispensers comprises a cold cabinet, ambient cabinet or a secure storage structure; wherein the cold cabinet and ambient cabinet each contain one or more shelves provided with one or more individual trays in identifiable locations thereon, each said tray having associated therewith a weighing device operatively linked to the processor, wherein the weighing device detects removal of a beverage product from a tray and transmits to the processor which enables the processor to determine the quantity and type of beverage product removed from the tray; and optionally wherein the weighing device comprises an analogue or digital load cell or strain gauge.

7. Apparatus according to claim 4 wherein at least one of the plurality of metering dispensers comprises a fixed volume spirits dispenser and the locking means comprises an electro-mechanical locking device, wherein the electro-mechanical locking device is held within an adaptor which is removably connected to the dispenser; and wherein the electromechanical locking device comprises a locking element for engaging a dispensing arm or lever of the fixed volume dispenser to restrict movement thereof and prevent dispensing of the beverage, the locking element being actuable (e.g. by means of a solenoid) when a user is identified by the user identifying means to disengage the dispensing arm or lever of the dispenser to permit dispensing of the beverage.

8. Apparatus according to any claim 7 wherein the electro-mechanical locking device comprises a housing and means for lockably attaching the housing to the fixed volume spirits dispenser; the housing containing an electromechanical locking element for engaging a dispensing arm or lever of the fixed volume dispenser to restrict movement thereof and prevent dispensing of the spirits, the electromechanical locking element being actuable when an authorised user is identified by the user identifying device thereby to disengage the dispensing arm or lever of the dispenser to permit dispensing of the beverage; and wherein the electro-mechanical locking device is provided with electronic communication means for communicating with the processor of the apparatus of any one of claims 1 to 7, and a plurality of switches which are opened or closed in response to movement of the dispensing arm or lever of the fixed volume dispenser and wherein the opening and closing of the switches generates signals which are transmitted via the electronic communication means to the processor and which indicate the volume of spirits dispensed from the dispenser.

9. Apparatus according to claim 8 wherein the electro-mechanical locking device is provided with a pair of switches, one at either end of a range of movement of the dispensing arm or lever or an element mechanically coupled thereto, which indicate when a required volume of spirit has been dispensed.

10. Apparatus according to any one of claims 1 to 3 wherein the metering dispensers comprise a dispensing cabinet for containing beverage products, the dispensing cabinet having one or more shelves therein, each shelf having attached thereto or mounted thereon a plurality of trays each tray having associated therewith a weighing device for detecting removal of a beverage product from the tray.

11. Apparatus according to claim 10 wherein the dispensing cabinet comprises or is operatively connected to means for identifying the location of a said tray and the identity of beverage product stored thereon and for determining from a change in weight on the said tray when a beverage product has been removed from or added to the tray; and wherein the detecting weighing device comprises an analogue or digital load cell or strain gauge

12. A beverage storing and dispensing system comprising an apparatus as defined in any one of the preceding claims and a stock of beverage products, the stock of beverage products being recorded in an inventory stored on an electronic storage device or medium associated with the processor, a proportion of the stock of beverage products being stored in the one or more storage rooms and a proportion of the stock being connected to the plurality of dispensing devices; wherein each of the beverage products forming the proportion of the stock in the one or more storage rooms is located on a tray having an associated weighing device which registers the weight of the beverage product and detects removal of the beverage product from the tray and transmits to the processor information enabling the processor to determine the quantity and type of beverage products removed from the tray.

13. A system according to claim 12 wherein each beverage product, or a group of linked beverage products, has its own tray.

## Patentansprüche

1. Einrichtung zum Steuern und Überwachen der Lagerung und Ausgabe von Getränkeprodukten, wobei die Einrichtung Folgendes umfasst:
eine Vielzahl von Dosierspendern (10, 11, 16, 18), die einen Spender für Fassgetränke an einer Verkaufsstelle beinhalten, von der ein oder mehrere autorisierte Benutzer Getränkeprodukte an Kunden ausgeben können;
eine Vielzahl von Verriegelungsmitteln (15) 1. Instanz zum Verhindern der Ausgabe eines Getränkeprodukts, wobei jedes Verriegelungsmittel (15) mit einem anderen der Dosierspender (10, 11, 16, 18) wirkverknüpft ist;
eine Vielzahl von Benutzeridentifizierungsvorrichtungen (12) zum Identifizieren von autorisierten Benutzern; und
einen Prozessor (13) zum Empfangen und Verarbeiten von Daten von den Benutzeridentifizierungsvorrichtungen (12) und Dosierspendern (10, 11, 16, 18), Aufzeichnen der Ausgabe von Getränkeprodukten aus den Dosierspendern (10, 11, 16, 18) durch autorisierte Benutzer und Berechnen des Gesamtwertes von jeder Transaktion, die durch jeden Benutzer getätigt wird, **dadurch gekennzeichnet, dass** die Einrichtung ferner Folgendes umfasst:
eine Vielzahl von Produktregistrierungsvorrichtungen zum Registrieren des Vorhandenseins von Getränkeprodukten in einem oder mehreren sicheren Lagerräumen (17), wobei jede Produktregistrierungsvorrichtung einem Getränkeprodukt oder einer verknüpften Gruppe von Getränkeprodukten zugeordnet ist, wobei die Produktregistrierungsvorrichtungen ein Tablett umfassen, auf dem sich das Getränkeprodukt oder die verknüpfte Gruppe von Getränkeprodukten befindet, wobei das Tablett eine zugeordnete Wiegevorrichtung aufweist, die das Gewicht des Getränkeprodukts oder der verknüpften Gruppe von Produkten registriert und Entfernung des Getränkeprodukts oder der Gruppe von Produkten von dem Tablett erfasst und an den Prozessor Informationen übermittelt, die dem Prozessor ermöglichen, die Menge und Art an Getränkeprodukten zu bestimmen, die von dem Tablett entfernt wurden;
ein oder mehrere Verriegelungsmittel (15) 2. Instanz zum Steuern von Zugang zu dem einen oder den mehreren Lagerräumen (17), wobei jedes Verriegelungsmittel 2. Instanz einem Lagerraum zugeordnet ist;
wobei jede Benutzeridentifizierungsvorrichtung (12) mit einem anderen der Verriegelungsmittel (15) 1. Instanz und 2. Instanz wirkverknüpft ist, sodass ein autorisierter Benutzer das Verriegelungsmittel 1. Instanz entriegeln und dadurch ein Getränkeprodukt aus einem wirkverknüpften Dosierspender ausgeben kann oder durch Entriegeln eines Verriegelungsmittels 2. Instanz einen von dem einen oder den mehreren sicheren Lagerräumen (17) betreten kann; und
wobei der Prozessor (13) ferner Daten von den Produktregistrierungsvorrichtungen empfängt und verarbeitet und die Platzierung von Getränkeprodukten in dem einen oder den mehreren Lagerräumen (17) aufzeichnet, wobei die Entfernung von Getränkeprodukten aus dem einen oder den mehreren sicheren Lagerräumen (17) und Entfernungen von Bestand aus dem sicheren Lagerraum mit der Hinzufügung von Getränkeprodukten zu einem oder mehreren der Dosierspender durch den Prozessor korreliert werden können.

2. Einrichtung nach Anspruch 1, die eine Registrierkasse umfasst, die mit dem Prozessor wirkverknüpft ist, der den berechneten Gesamtwert von jeder Kundentransaktion empfängt, die durch jeden Benutzer getätigt wird, und wobei die Registrierkasse mit Mitteln bereitgestellt ist, die verifizieren, dass eine korrekte Menge an Bargeld beim Abwickeln der Kundentransaktion darin platziert worden ist; und wobei optional ferner die Registrierkasse eine Benutzeridentifizierungsvorrichtung aufweist, die damit wirkverbunden ist, wobei die Registrierkasse angeordnet ist, um den berechneten Gesamtwert von jeder Kundentransaktion bei Identifizierung eines autorisierten Benutzers durch die Vorrichtung anzuzeigen.

3. Einrichtung nach einem der vorhergehenden Ansprüche, umfassend zumindest einen Anzeigemonitor, der ausgelegt ist, um eine laufende Summe einer Transaktion oder Reihe von Transaktionen anzuzeigen, die durch einen autorisierten Benutzer getätigt werden.

4. Einrichtung nach einem der vorhergehenden Ansprüche, wobei die Dosierspender ausgewählt sind aus:
(i) Spirituosenspendern mit festem Volumen;
(ii) Spendern für Fassgetränke;
(iii) temperaturgesteuerten Schränken; und
(iv) Umgebungstemperaturschränken.

5. Einrichtung nach einem der vorhergehenden Ansprüche, wobei der eine oder die mehreren sicheren Lagerräume einen Raum, einen Kasten oder eine andere sichere Umschließung umfassen, die einen Teil eines Gebäudes bilden oder darin errichtet sind, in dem sich zumindest ein Teil der Einrichtung befindet.

6. Einrichtung nach einem der vorhergehenden Ansprüche, wobei die Vielzahl von Dosierspendern einen Kühlschrank, einen Umgebungstemperaturschrank oder eine sichere Lagerstruktur umfasst, wobei der Kühlschrank und der Umgebungstemperaturschrank jeweils ein oder mehrere Regale enthalten, die mit einem oder mehreren einzelnen Tabletts an identifizierbaren Stellen darauf bereitgestellt sind, wobei jedem Tablett eine Wiegevorrichtung zugeordnet ist, die mit dem Prozessor wirkverknüpft ist, wobei die Wiegevorrichtung Entfernung eines Getränkeprodukts von einem Tablett erfasst und an den Prozessor übermittelt, wodurch dem Prozessor ermöglicht wird, die Menge und Art des Getränkeprodukts zu bestimmen, das von dem Tablett entfernt wurde; und wobei optional die Wiegevorrichtung eine analoge oder digitale Lastzelle oder einen Dehnungsmesser umfasst.

7. Einrichtung nach Anspruch 4, wobei zumindest einer aus der Vielzahl von Dosierspendern einen Spirituosenspender mit festem Volumen umfasst und das Verriegelungsmittel eine elektromechanische Verriegelungsvorrichtung umfasst, wobei die elektromechanische Verriegelungsvorrichtung innerhalb eines Adapters gehalten wird, der entfernbar mit dem Spender verbunden ist; und wobei die elektromechanische Verriegelungsvorrichtung ein Verriegelungselement zum Eingreifen mit einem Spenderarm oder -hebel des Spenders mit festem Volumen umfasst, um Bewegung davon einzuschränken und Ausgabe des Getränks zu verhindern, wobei das Verriegelungselement (z. B. mittels eines Solenoids) betätigbar ist, wenn ein Benutzer durch das Benutzeridentifizierungsmittel identifiziert wird, um den Spenderarm oder -hebel des Spenders zu lösen, um Ausgabe des Getränks zu ermöglichen.

8. Einrichtung nach Anspruch 7, wobei die elektromechanische Verriegelungsvorrichtung ein Gehäuse und Mittel zum verriegelbaren Anbringen des Gehäuses an dem Spirituosenspender mit festem Volumen umfasst, wobei das Gehäuse ein elektromechanisches Verriegelungselement zum Eingreifen mit einem Spenderarm oder -hebel des Spenders mit festem Volumen enthält, um Bewegung davon einzuschränken und Ausgabe der Spirituosen zu verhindern, wobei das elektromechanische Verriegelungselement betätigbar ist, wenn ein autorisierter Benutzer durch die Benutzeridentifizierungsvorrichtung identifiziert wird, um dadurch den Spenderarm oder - hebel des Spenders zu lösen, um Ausgabe des Getränks zu ermöglichen, und wobei die elektromechanische Verriegelungsvorrichtung mit elektronischen Kommunikationsmitteln zum Kommunizieren mit dem Prozessor der Einrichtung nach einem der Ansprüche 1 bis 7, und einer Vielzahl von Schaltern bereitgestellt ist, die als Reaktion auf Bewegung des Spenderarms oder - hebels des Spenders mit festem Volumen geöffnet oder geschlossen werden, und wobei das Öffnen und Schließen der Schalter Signale erzeugt, die über das elektronische Kommunikationsmittel an den Prozessor übermittelt werden und die das Volumen der Spirituosen angeben, die aus dem Spender ausgegeben werden.

9. Einrichtung nach Anspruch 8, wobei die elektromechanische Verriegelungsvorrichtung mit einem Paar Schalter bereitgestellt ist, einer an jedem Ende eines Bewegungsbereichs des Spenderarms oder -hebels oder eines Elements, das mechanisch daran gekoppelt ist, die angeben, wann ein erforderliches Volumen an Spirituosen ausgegeben worden ist.

10. Einrichtung nach einem der Ansprüche 1 bis 3, wobei die Dosierspender einen Ausgabeschrank zum Enthalten von Getränkeprodukten umfassen, wobei der Ausgabeschrank ein oder mehrere Regale darin aufweist, wobei jedes Regal eine daran angebrachte oder daran montierte Vielzahl von Tabletts aufweist, wobei jedem Tablett eine Wiegevorrichtung zum Erfassen von Entfernung eines Getränkeprodukts von dem Tablett zugeordnet ist.

11. Einrichtung nach Anspruch 10, wobei der Ausgabeschrank Mittel zum Identifizieren der Stelle eines Tabletts und der Identität von Getränkeprodukt, das darauf gelagert ist, und zum Bestimmen anhand einer Gewichtsänderung auf dem Tablett, wann ein Getränkeprodukt von dem Tablett entfernt worden oder diesem hinzugefügt worden ist, umfasst oder damit wirkverbunden ist; und wobei die erfassende Wiegevorrichtung eine analoge oder digitale Lastzelle oder einen Dehnungsmesser umfasst.

12. System zum Lagern und Ausgeben von Getränken, umfassend eine Einrichtung nach einem der vorhergehenden Ansprüche und einen Vorrat an Getränkeprodukten, wobei der Vorrat an Getränkeprodukten in einem Inventar aufgezeichnet wird, das auf einer elektronischen Speichervorrichtung oder einem Medium gespeichert wird, das dem Prozessor zugeordnet ist, wobei ein Teil des Vorrats an Getränkeprodukten in dem einen oder den mehreren Lagerräumen gelagert wird und ein Teil des Vorrats mit der Vielzahl von Ausgabevorrichtungen verbunden ist; wobei sich jedes der Getränkeprodukte, das den Teil des Vorrats in dem einen oder den mehreren Lagerräumen bildet, auf einem Tablett befindet, das eine zugeordnete Wiegevorrichtung aufweist, die das Gewicht des Getränkeprodukts registriert und Entfernen des Getränkeprodukts von dem Tablett erfasst und an den Prozessor Informationen übermittelt, die dem Prozessor ermöglichen, die Menge und Art der Getränkeprodukte zu bestimmen, die von dem Tablett entfernt wurden.

13. System nach Anspruch 12, wobei jedes Getränkeprodukt oder eine Gruppe von verknüpften Getränkeprodukten sein eigenes Tablett aufweist.

## Revendications

1. Appareil pour contrôler et surveiller le stockage et la distribution de produits de boisson ; l'appareil comprenant :
une pluralité de distributeurs doseurs (10, 11, 16, 18) comprenant un distributeur de boissons en pression dans un lieu de vente à partir duquel un ou plusieurs utilisateurs autorisés peuvent distribuer des produits de boisson aux clients ;
1^{er} exemple une pluralité de moyens de verrouillage (15) pour empêcher la distribution d'un produit de boisson, chacun desdits moyens de verrouillage (15) étant relié fonctionnellement à l'un différent desdits distributeurs doseurs (10, 11, 16, 18) ;
une pluralité de dispositifs d'identification d'utilisateur (12) pour identifier des utilisateurs autorisés ; et
un processeur (13) pour recevoir et traiter des données provenant desdits dispositifs d'identification d'utilisateur (12) et distributeurs doseurs (10, 11, 16, 18), enregistrer la distribution de produits de boisson à partir des distributeurs doseurs (10, 11, 16, 18) par les utilisateurs autorisés et calculer la valeur totale de chaque transaction effectuée par chaque utilisateur ; **caractérisé en ce que** l'appareil comprend en outre :
une pluralité de dispositifs d'enregistrement de produit pour enregistrer la présence de produits de boisson dans une ou plusieurs salles de stockage sécurisées (17), chaque dispositif d'enregistrement de produit étant associé à un produit de boisson ou à un groupe lié de produits de boisson, dans lequel les dispositifs d'enregistrement de produit comprennent un plateau sur lequel se trouve le produit de boisson ou le groupe lié de produits de boisson, le plateau ayant un dispositif de pesée associé qui enregistre le poids du produit de boisson ou du groupe lié de produits et détecte le retrait du produit de boisson ou du groupe de produits du plateau et transmet au processeur des informations permettant au processeur de déterminer la quantité et le type de produits de boisson retirés du plateau ;
2^{ème} exemple un ou plusieurs moyens de verrouillage (15) pour contrôler l'accès à l'une ou plusieurs salles de stockage sécurisé (17), chaque moyen de verrouillage du 2^{ème} exemple étant associé à une salle de stockage ;
dans lequel chaque dispositif d'identification d'utilisateur (12) est relié fonctionnellement à l'un différent desdits moyens de verrouillage du 1^{er} exemple et du 2^{ème} exemple (15) de sorte qu'un utilisateur autorisé puisse déverrouiller ledit moyen de verrouillage du 1^{er} exemple et ainsi distribuer un produit de boisson à partir d'un distributeur doseur relié fonctionnellement ou, en déverrouillant un moyen de verrouillage du 2^{ème} exemple, puisse entrer dans l'une ou plusieurs salles de stockage sécurisé (17) ; et
dans lequel le processeur (13) reçoit et traite en outre des données provenant desdits dispositifs d'enregistrement de produit, et enregistre le placement des produits de boisson dans l'une ou plusieurs salles de stockage (17), le retrait des produits de boisson de l'une ou plusieurs salles de stockage sécurisé (17) et les retraits de stock de la salle de stockage sécurisé peuvent être corrélés avec l'ajout de produits de boisson à l'un ou plusieurs des distributeurs doseurs par l'opérateur.

2. Appareil selon la revendication 1, qui comprend une caisse enregistreuse reliée fonctionnellement au processeur qui reçoit la valeur totale calculée de chaque transaction client effectuée par chaque utilisateur ; et dans lequel la caisse enregistreuse est pourvue de moyens vérifiant qu'un montant correct d'espèces a été placé dans celle-ci en règlement de ladite transaction client ; et éventuellement en outre dans lequel la caisse enregistreuse a un dispositif d'identification d'utilisateur relié fonctionnellement à celle-ci, la caisse enregistreuse étant agencée pour afficher la valeur totale calculée de chaque dite transaction client lors de l'identification d'un utilisateur autorisé par le dispositif.

3. Appareil selon l'une quelconque des revendications précédentes comprenant au moins un moniteur d'affichage qui est adapté pour afficher un total cumulé d'une transaction ou d'une série de transactions effectuées par un utilisateur autorisé.

4. Appareil selon l'une quelconque des revendications précédentes, dans lequel les distributeurs doseurs sont choisis parmi :
(i) des distributeurs de spiritueux à volume fixe ;
(ii) des distributeurs de boissons en pression ;
(iii) des armoires à température contrôlée ; et
(iv) des armoires à température ambiante.

5. Appareil selon l'une quelconque des revendications précédentes, dans lequel l'une ou plusieurs salles de stockage sécurisé comprennent une salle, un placard ou une autre enceinte sécurisée faisant partie ou construite dans un bâtiment dans lequel au moins une partie de l'appareil se trouve.

6. Appareil selon l'une quelconque des revendications précédentes, dans lequel la pluralité de distributeurs doseurs comprend une armoire froide, une armoire à température ambiante ou une structure de stockage sécurisé ; dans lequel l'armoire froide et l'armoire à température ambiante contiennent chacune une ou plusieurs étagères munies d'un ou plusieurs plateaux individuels à des emplacements identifiables sur celles-ci, chacun desdits plateaux étant associé à un dispositif de pesée relié fonctionnellement au processeur, dans lequel le dispositif de pesée détecte le retrait d'un produit de boisson d'un plateau et transmet au processeur ce qui permet au processeur de déterminer la quantité et le type de produit de boisson retiré du plateau ; et éventuellement dans lequel le dispositif de pesée comprend une cellule de charge ou une jauge de contrainte analogique ou numérique.

7. Appareil selon la revendication 4, dans lequel au moins l'un de la pluralité de distributeurs doseurs comprend un distributeur de spiritueux à volume fixe et les moyens de verrouillage comprennent un dispositif de verrouillage électromécanique, dans lequel le dispositif de verrouillage électromécanique est maintenu à l'intérieur d'un adaptateur qui est relié de façon amovible au distributeur ; et dans lequel le dispositif de verrouillage électromécanique comprend un élément de verrouillage pour engager un bras ou un levier de distribution du distributeur à volume fixe pour limiter son mouvement et empêcher la distribution de la boisson, l'élément de verrouillage pouvant être actionné (par exemple au moyen d'un solénoïde) lorsqu'un utilisateur est identifié par le moyen d'identification d'utilisateur pour désengager le bras ou le levier de distribution du distributeur afin de permettre la distribution de la boisson.

8. Appareil selon l'une quelconque des revendications 7, dans lequel le dispositif de verrouillage électromécanique comprend un boîtier et des moyens pour fixer de manière verrouillable le boîtier au distributeur de spiritueux à volume fixe ; le boîtier contenant un élément de verrouillage électromécanique destiné à engager un bras ou un levier de distribution du distributeur à volume fixe pour limiter son mouvement et empêcher la distribution des spiritueux, l'élément de verrouillage électromécanique pouvant être actionné lorsqu'un utilisateur autorisé est identifié par le dispositif d'identification d'utilisateur pour ainsi désengager le bras ou levier de distribution du distributeur et permettre la distribution de la boisson ; et dans lequel le dispositif de verrouillage électromécanique est pourvu de moyens de communication électroniques pour communiquer avec le processeur de l'appareil selon l'une quelconque des revendications 1 à 7, et une pluralité de commutateurs qui sont ouverts ou fermés en réponse au mouvement du bras ou levier de distribution du distributeur à volume fixe et dans lequel l'ouverture et la fermeture des commutateurs génèrent des signaux qui sont transmis via les moyens de communication électroniques au processeur et qui indiquent le volume de spiritueux distribué depuis le distributeur.

9. Appareil selon la revendication 8, dans lequel le dispositif de verrouillage électromécanique est pourvu d'une paire de commutateurs, un à chaque extrémité d'une plage de mouvement du bras ou levier de distribution ou d'un élément couplé mécaniquement à celui-ci, qui indiquent quand un volume requis de spiritueux a été distribué.

10. Appareil selon l'une quelconque des revendications 1 à 3, dans lequel les distributeurs doseurs comprennent une armoire de distribution pour contenir des produits de boisson, l'armoire de distribution ayant une ou plusieurs étagères dans celle-ci, chaque étagère ayant une pluralité de plateaux qui lui sont attachés ou qui sont montés sur celle-ci, chaque plateau ayant un dispositif de pesée qui lui est associé pour détecter le retrait d'un produit de boisson du plateau.

11. Appareil selon la revendication 10, dans lequel l'armoire de distribution comprend ou est reliée fonctionnellement à des moyens pour identifier l'emplacement dudit plateau et l'identité du produit de boisson stocké sur celui-ci et pour déterminer à partir d'un changement de poids sur ledit plateau quand un produit de boisson a été supprimé ou ajouté au plateau ; et dans lequel la détection du dispositif de pesée comprend une cellule de charge ou une jauge de contrainte analogique ou numérique.

12. Système de stockage et de distribution de boissons comprenant un appareil tel que défini dans l'une quelconque des revendications précédentes et un stock de produits de boisson, le stock de produits de boisson étant enregistré dans un inventaire stocké sur un dispositif ou support de stockage électronique associé au processeur, une partie du stock de produits de boisson étant stockée dans l'une ou plusieurs salles de stockage et une partie du stock étant connectée à la pluralité de dispositifs de distribution ; dans lequel chacun des produits de boisson formant la partie du stock dans l'une ou plusieurs salles de stockage se trouve sur un plateau ayant un dispositif de pesée associé qui enregistre le poids du produit de boisson et détecte le retrait du produit de boisson du plateau et transmet au processeur des informations permettant au processeur de déterminer la quantité et le type de produits de boisson retirés du plateau.

13. Système selon la revendication 12, dans lequel chaque produit de boisson, ou un groupe de produits de boisson liés, a son propre plateau.
